(19)

**Europäisches Patentamt**

**European Patent Office**

**Office européen des brevets**

(11) **EP 4 645 161 A1**

(12) **EUROPEAN PATENT APPLICATION**

(43) Date of publication:
**05.11.2025 Bulletin 2025/45**

(21) Application number: **24173754.3**

(22) Date of filing: **02.05.2024**

(51) International Patent Classification (IPC):
**G06N 3/02** (2006.01)   **G06N 3/082** (2023.01)
**G06V 10/70** (2022.01)

(52) Cooperative Patent Classification (CPC):
**G06N 3/08; G06N 3/02; G06N 3/045; G06N 3/082;**
**G06V 10/70**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Sakmann, Kaspar**
**70469 Stuttgart (DE)**
• **Timans, Alexander**
**1017 GP Amsterdam (NL)**
• **Naesseth, Christian Andersson**
**1018LH Amsterdam (NL)**
• **Nalisnick, Eric**
**1086 ZR Amsterdam (NL)**
• **Zhang, Dan**
**71229 Leonberg (DE)**
• **Jazbec, Metod**
**1012BH Amsterdam (NL)**

(54) **SAFE ACCELERATING OF NEURAL NETWORK INFERENCE BY EARLY EXIT**

(57)      A method (100) for determining for which inputs records (2) of measurement data the processing by a neural network (1) may be cut short by obtaining the output (3, 3a-3c) from an early-exit point (1a-1c) of the neural network (1), rather than by traversing the whole neural network (1), the method comprising the steps of:
• providing (110) a set of calibration records (2*) of measurement data;
• processing (120) the calibration records (2*) of measurement data by the full neural network (1) to obtain reference outputs (3*);
• recording (130) one or more early-exit outputs (3a*-3c*) that the neural network (1) outputs for the calibration records (2*) at one or more early-exit points (1a-1c), as well as respective confidences (4a*-4c*) of these early-exit outputs (3a*-3c*);
• providing (140) a set of predetermined conditions (5) that are each dependent both on early-exit outputs (3a*-3c*) and on reference outputs (3*); and
• evaluating (150) one or more thresholds (6) for the confidences (4a-4c) of the early-exit outputs (3a-3c) such that, if the confidences (4a-4c) exceed the thresholds (6), the respective early-exit outputs (3a-3c) can be expected to meet the conditions (5).

Fig. 1b

Fig. 1a

EP 4 645 161 A1

**Fig. 1a**

**Fig. 1b**

## Description

The present invention relates to the processing of measurement data by neural networks that offer, on top of the output resulting from the processing of the measurement data by the full neural network, intermediate results tapped from early exit points of the neural network.

Background

During the training of a neural network, the learned knowledge is stored in parameters that characterize the behavior of the neural network. The capacity for storing knowledge is therefore commensurate with the number of trainable parameters. Foundation models are neural networks that are trained on huge datasets comprising diverse training examples. They comprise very many parameters, and a forward pass through the full network is computationally expensive.

To get results quicker, intermediate results that are the outcome of processing the input data by only part of the neural network are tapped from early-exit points. These early-exit outputs are at least an approximation of the final processing result, which may be obtained some time ahead of the final processing result. How good this approximation is may be estimated based on confidences that the neural network delivers in combination with the early-exit outputs. A common tactic is to compare these confidences to a predetermined threshold. If the confidences exceed this threshold, the early-exit output is deemed to be a sufficiently good approximation of the final result. If the threshold is not exceeded, a later early-exit result or the final processing result is used.

Disclosure of the invention

The invention provides a method for determining for which inputs records of measurement data the processing by a neural network may be cut short by obtaining the output from an early-exit point of the neural network, rather than by traversing the whole neural network.

Herein, a "record" may be, in particular, understood to be any data structure comprising measurement data that belong together and characterize a situation, event, object or other entity whose properties may be evaluated using the output of the neural network. For example, a record of data may be an image, a time series of measurement values, or even a multimodal combination of measurement data.

In the course of the method, a set of calibration records of measurement data is provided. These calibration records may optionally be labelled with ground-truth outputs to which the neural network should ideally map the calibration records, but this is not required.

The calibration records of measurement data are processed by the full neural network to obtain reference outputs. While the neural network performs this processing, early-exit outputs become available at one or more early-exit points. For example, the neural network may be organized as a sequence of layers or blocks, where the output of one layer or block is fed as input into the next layer or block. Each such output that is not yet the final output may serve as early-exit output. In the course of the present method, the early-exit outputs that the neural network outputs for the calibration records at the one or more early exit points.

A set of predetermined conditions that are each dependent both on early-exit outputs and on reference outputs is provided. In particular, such conditions may stipulate different aspects of how good the early-exit outputs approximate the reference outputs that result from processing of the calibration records with the full neural network.

One or more thresholds for the confidences of the early exit outputs are evaluated in a manner that, if the confidences exceed the thresholds, the respective early-exit outputs can be expected to meet the conditions. This evaluating (determining) of the thresholds may be performed in any suitable manner.

In one example that is computationally expensive, but simple to implement, candidate thresholds may be set up, and with these candidate thresholds in place, it may be tested whether the predetermined conditions are met on the set of calibration records. If the predetermined conditions are met, the candidate thresholds may then be lowered, so as to allow earlier exit for more of the calibration records. If the predetermined conditions are not met, the candidate thresholds may be raised, so as to force a more intense processing on more of the calibration records. The sought optimal state is that, for as many calibration records as possible, the processing is exited as early as possible, while the predetermined conditions are still met.

The end result is that, during inference of the neural network with records of measurement data, the processing will be exited early for all records for which this is appropriate, so as to save processing time and power. In particular, if there is a stream of such records of measurement data, there may not be enough resources available to process them all with the full neural network. Rather, where the sought result is already clear from an early-processing output, this should be used to free up resources for the really difficult records that require the full processing.

The situation is somewhat analogous to immigration and customs checks at a port of entry. When several large airplanes disgorge thousands of passengers in a matter of minutes, it is not possible to perform thorough checks on everybody because this would keep many people waiting in line for hours. Rather, the vast majority of passengers only receive a cursory screening, have their passport stamped, and are waved through without having to open their baggage. But if there is anything suspicious that causes the confidence in this early-exit decision "allow entry" to drop below the threshold, then the individual is singled out for further questioning and background checks, and if this casts even more doubt on the individual, the full processing by the "neural network" of the port of entry may even comprise X-raying the individual for swallowed contraband and drilling into belongings where contraband is suspected. For example, if the passenger looks nervous or appears to be ill-equipped for the purported purpose of travel, the first early exit is forgone, and the next processing block asks him further questions, like what he intends to see or do during his "holiday" and how much money he has available. If it then turns out that the passenger has no knowledge whatsoever about what to see or do at his destination, and he has not nearly enough money to support himself for the intended length of stay, then it can be suspected that he is up to something else. The next early exit is forgone, and the next processing block opens the passenger's baggage. If this turns up tools of his trade together with job application documents, then it is clear that the passenger is intending to work in the country on a visa that does not allow this. Then the dream of making a new country home is shattered.

In a simple implementation, for example, a classification score that is obtained as the early-exit output of a classifier network may be directly used as the confidence score. I.e., one and the same result may double as the corresponding confidence score. But in principle, any notion of confidence that is appropriate for the application at hand may be used, such as top-1, top-diff, normalized entropy, and normalized energy. Also, confidences may be aggregated using any suitable confidence aggregation measure, such as: mean, median, 0.25-quantile (lower quartile), patch sliding window (e.g., 50x50, mean over patch) with 0.01 -quantile.

In a particularly advantageous embodiment, at least one condition stipulates that, given that the one or more confidences of the early-exit outputs exceed the one or more thresholds, an given undesirable state can be expected to be present in an expression strength of $\alpha$ or less with a probability that exceeds $1 - \delta$, with $\alpha$ being a predetermined risk tolerance and $\delta$ being a predetermined error level. For example, given a neural network (or part thereof) $f(x) = y$ that maps input data $x$ to a prediction $y$, the undesirable state may be expressed as a "risk function" $R(f_\lambda(x), y)$ that depends on inputs $x$ (e.g., from calibration records) and corresponding ground-truth outputs $y$, as well as on the threshold $\lambda$ used to decide over the early exiting. The "risk function" may take values in the interval [0,1] and represent an indicator as to how present the undesired state is. There are mathematical formalisms available for controlling the risk in the sense that the probability

$$P(R(f_\lambda(x), y) \leq \alpha) \geq 1 - \delta$$

of the risk function $R(f_\lambda(x), y)$ staying below $\alpha$, given that the behavior of the neural network $f_\lambda(x)$ comprises early exiting if the confidence of an early-exit output exceeding the threshold value $\lambda$, is more than $1 - \delta$. That is, there is no absolute guarantee that the predetermined condition for the risk function will never be violated, but such a violation is sufficiently improbable.

This risk control guarantee is meaningful and useful in practice, since

a) it is distribution-free, i.e., it does not impose particular assumptions on the data distribution $p(x, y)$,
b) it is post-hoc applicable and holds for any arbitrary choice of underlying predictor $f_\lambda$, and
c) it is finite-sample, i.e., its validity holds for finite sets of calibration records and does not rely on asymptotic limit statements.

This is valid to the extent that sample draws from $p(x,y)$ are "independent and identically distributed" and exchangeable. That is, both random variables $x$ and $y$ have the same probability distribution and are mutually independent. The limits of this are reached, e.g., in scenarios of distribution drift our out-of-distribution test data. Furthermore, the risk control guarantee is a marginal one on the sense that it holds on average across samples. It is not a conditional guarantee in the sense that it holds for each and every sample. Strong notions of conditional risk control usually come at the price of introducing substantial assumptions.

In one particularly advantageous embodiment, the evaluating of the thresholds comprises:

- setting up, for each candidate threshold in a discrete set of candidate thresholds, the null hypothesis that even with confidences above the threshold, the given undesirable state will be present with an expression strength of more than $\alpha$;
- testing this null hypothesis based at least in part on the early-exit outputs and the reference outputs; and
- in response to the null hypothesis being rejected, determining the candidate threshold as one of the sought thresholds.

Akin to the simple approach of testing candidate threshold values presented above, this approach works with discrete values of thresholds. The null hypothesis that is then set up says that the threshold value under test is not suitable because the predetermined condition (namely an expression strength of the undesired state at $\alpha$ or less) is violated. This null hypothesis is easier to test than the opposite hypothesis, namely that the threshold value under test is suitable. The null hypothesis is tested using statistical methods based at least in part on the early-exit outputs and the reference outputs. That is, a probability ("p-value") is determined that, given the available data, the null hypothesis is valid. If this probability is sufficiently low, this means that the null hypothesis is rejected, and the threshold value is usable as one of the sought thresholds.

This testing of the thresholds is more relaxed than the simple testing initially presented: It is not required that the predetermined condition is fulfilled for every calibration record. Rather, the null hypothesis can still be rejected even if, for some calibration records, the risk function $R(f_\lambda(x),y)$ exceeds $\alpha$.

In a further particularly advantageous embodiment, the neural network is a predictive model whose output comprises at least one sought property of an input record of measurement data. For predictive models, a comparison between early-exit outputs on the one hand, and the output produced by the full neural network on the other hand, is more meaningful than, e.g., for generative models.

In connection with this, in a further particularly advantageous embodiment, the undesirable state comprises that the true value of a quantity predicted for a calibration record is not in a set of values predicted by the neural network for this calibration record. That is, the risk function $R(f_\lambda(x),y)$ can be written, e.g., as:

$$R(f_\lambda(x), y) = [y \notin f_\lambda(x)],$$

where the square brackes denote the indicator function. I.e., it is 1 when the statement inside evaluates to true and 0 when the statement inside evaluates to false. Optionally, the indicator function may take values in the interval [0,1] if the statement inside can be true or false to a certain degree.

In a further particularly advantageous embodiment, at least one of the predetermined condition stipulates:

- a prediction consistency in the sense that the early-exit outputs are close to the reference outputs; and/or
- a confidence consistency in the sense that confidence estimates for early-exit outputs are close to confidence estimates for reference outputs; and/or
- a performance continuity in the sense that the value of a given loss function for the early-exit outputs are close to the value of this loss function for the respective reference outputs.

That is, if $f_\lambda(x)$ is an early-exit output of the neural network for some input $x$, and $f_T(x)$ is the full output of the neural network for the same input $x$, a risk function for the prediction consistency can be written as:

$$R_p\big(f_\lambda(x), f_T(x)\big) = [f_\lambda(x) \neq f_T(x)].$$

By using the calibration dataset of calibration records and evaluating thresholds, such as by means of statistical null hypothesis testing as shown above, a threshold $\lambda_p$ may be found. This threshold will yield the fastest possible model, i.e., the model that exists as early as possible as often as possible, for which it can still be guaranteed that its predictions will not deviate too much from those of the full model on average.

Likewise, if $c_\lambda(x)$ is the confidence of the early-exit prediction $f_\lambda(x)$, and $c_T(x)$ is the confidence of the full-model prediction $f_T(x)$, a risk function for the confidence consistency can be written as:

$$R_c\big(c_\lambda(x), c_T(x)\big) = [c_\lambda(x) \neq c_T(x)].$$

Again, by using the calibration dataset of calibration records and evaluating thresholds, a threshold $\lambda_c$ may be found. This threshold will yield the fastest possible model, i.e., the model that exists as early as possible as often as possible, for which it can still be guaranteed that its confidence estimates will not deviate too much from those of the full model on average. The confidence estimate is particularly important for safety-critical applications, such as automated driving. The confidence estimate reflects how reliable or trustworthy a given prediction is.

The comparison between early-exit outputs $f_\lambda(x)$ and full outputs $f_T(x)$ need not be limited to the space of the outputs. Rather, alternatively or in combination to this, the value $L(f_\lambda(x))$ of a given loss function $L$ for the early-exit outputs $f_\lambda(x)$ may be compared to the value $L(f_T(x))$ of the loss function $L$ for the full outputs $f_T(x)$. A predetermined condition may stipulate that the values $L(f_\lambda(x))$ are close to the values $L(f_T(x))$. The loss function is used during training to rate the performance of the neural network. Thus, comparing $L(f_\lambda(x))$ to $L(f_T(x))$ measures whether the early exit introduces a performance gap. The type of loss function used depends on the concrete application at hand. For example, for image classification, a 0-1 loss may be used, and for semantic segmentation, a loss based on mean intersection over union, mIoU, may be used. In another example, to evaluate the quality of both predictions and confidence estimates simultaneously, the squared error between the predictive distribution p(y|x) and the one-hot encoding of the label $y$ may be used. In a further example, to additionally evaluate the consistency of confidence estimates, the Hellinger distance

$$L_H\big(p_\lambda(y|x), p_T(y|x)\big) := \frac{1}{\sqrt{2}} \sqrt{\sum_{k=1}^{K} \left( \sqrt{p_\lambda(k|x)} - \sqrt{p_T(k|x)} \right)^2}$$

may be evaluated.

In a further particularly advantageous embodiment, at least prediction consistency and confidence consistency conditions are combined. That is, at least one first threshold $\lambda_p$ is evaluated with respect to the prediction consistency. At least one second threshold $\lambda_c$ is evaluated with respect to the confidence consistency. A maximum of the first threshold $\lambda_p$ and the second threshold $\lambda_c$ is used as the final threshold. In this manner, both the risk regarding prediction consistency and the risk regarding confidence consistency are controlled at the same time. Due to the use of early exists where appropriate, the neural network will still perform faster on the average than a neural network that is always traversed in full. At the same time, the outputs, even if they are early-exit outputs, can be considered safe due to the statistical guarantees that have given rise to the first threshold $\lambda_p$ and the second threshold $\lambda_c$.

In a further particularly advantageous embodiment, the neural network is configured to output a classification, and/or a semantic segmentation, of the input record of measurement data. In particular, if the input record of measurement data is an image, classification and semantic segmentation are the most important computer vision tasks. Experiments relating to these tasks show that inference time is speeded up by an amount of between 10 % and 40 %. The exact efficiency gains depend on the choice of the parameters $\alpha$ and $\delta$.

In a further particularly advantageous embodiment, an input record of measurement data that has been acquired by at least one sensor is provided to the neural network. During the processing of this input record of measurement data, the confidence of at least one early exit output of the neural network is determined. In response to this confidence exceeding the previously evaluated threshold, the early-exit output is used as the output of the neural network in response to the input record of measurement data. If the threshold is not exceeded, e.g., a later early-exit output may be tested against the threshold, or the result of processing the input record of measurement data with the full neural network may be used. For many input records of measurement data, it will be possible to use some early-exit output, so the result will be delivered faster than after processing by the full neural network. This is of particular importance for safety-relevant applications, where a quick reaction is at least equally important as a correct result as such.

In a further particularly advantageous embodiment, based at least in part on the early-exit output, the presence of at least one object instance in a scenery that is being monitored by the at least one sensor is detected. This detected object instance is included in a representation of the scenery. In this use case, using early-exit output has the advantage that the representation of the scenery will be completed faster.

In a further particularly advantageous embodiment, based at least in part on the early-exit output, and/or on the representation of the scenery, an actuation signal is determined. A vehicle, a driving assistance system, a robot, a quality inspection system, a surveillance system, and/or a medical imaging system, is actuated with the actuation signal. In this manner, the probability that the reaction performed by the respective actuated system in response to the actuation signal is appropriate in the situation characterized by the input record of measurement data is improved.

In a further particularly advantageous embodiment, a stream of input records of measurement data is provided to the neural network. The neural network is implemented on a hardware platform with less processing resources than are needed to process all input records of measurement data from the stream by the full neural network. In this manner, the hardware platform can be downsized while at the same time ensuring that any early-exit outputs that are used are close enough to the output of the full network and fulfil all relevant safety requirements. In particular, in vehicular applications, there are hard constraints regarding the size, and/or the power consumption, of hardware platforms for processing neural networks. For most of the input records of measurement data in the stream, some early-exit output of the neural network will be usable.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In the following, the invention will be described using Figures without any intention to limit the scope of the invention.

Description of the Figures

Figure 1: Exemplary embodiment of the method 100 for determining for which inputs records 2 of measurement data the processing by a neural network 1 may be cut short;

Figure 2: Exemplary processing of a record 2 of measurement data in a neural network 1 with five layers 11-15 and three early-exit points 1a-1c;

Figure 3: Dependency on the accuracy A and the Brier score B of early-exit outputs of a neural network 1 on the index i of the early-exit point 1a-1c.

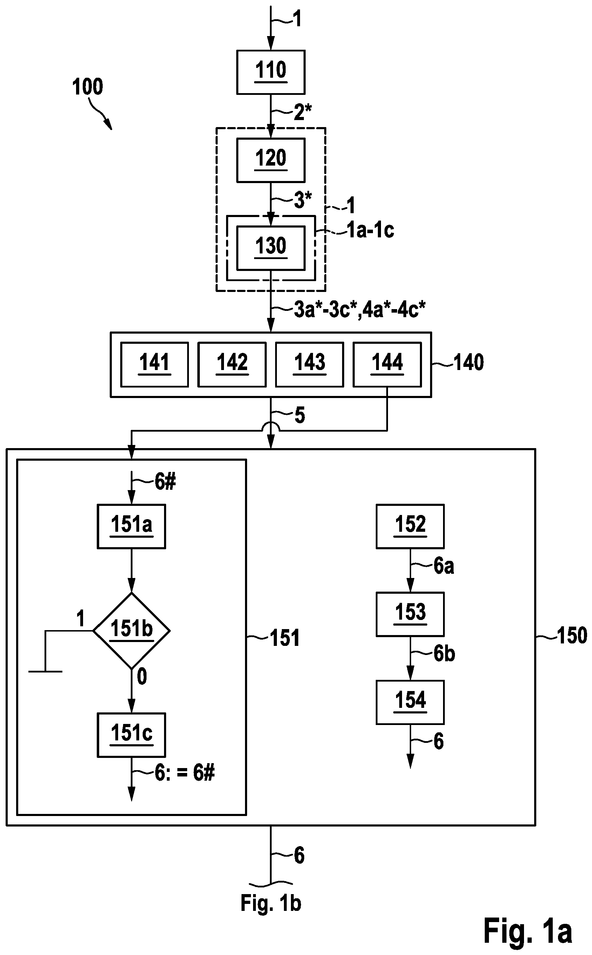

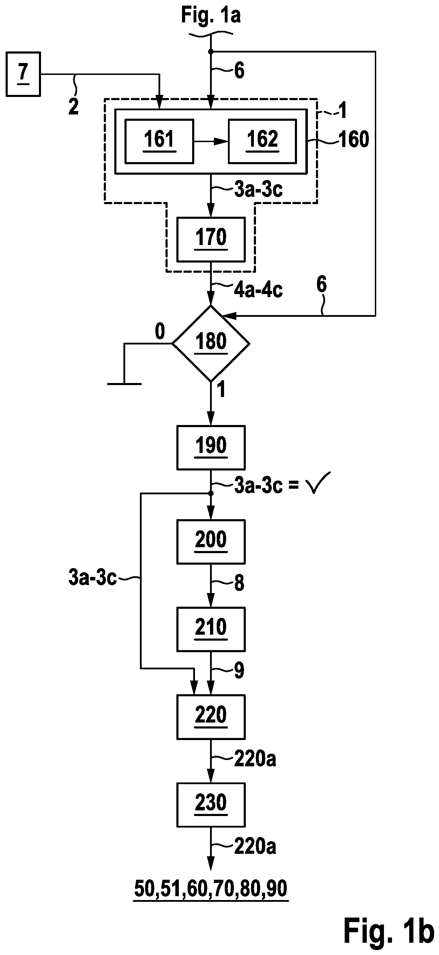

Figure 1 is a schematic flow chart of an exemplary embodiment of the method 100 for determining for which inputs records 2 of measurement data the processing by a neural network 1 may be cut short by obtaining the output 3, 3a-3c from an early-exit point 1a-1c of the neural network 1, rather by traversing the whole neural network 1.

In step 110, a set of calibration records 2* of measurement data is provided.

In step 120, the calibration records 2* of measurement data are processed by the full neural network 1 to obtain reference outputs 3*.

In step 130, one or more early-exit outputs 3a*-3c* that the neural network (1) outputs for the calibration records 2* at one or more early-exit points 1a-1c as well as respective confidences 4a*-4c* of these early-exit outputs 3a*-3c*, are recorded. In particular, the early exit outputs 3a*-3c*, as well as their confidences 4a*-4c*, may accrue at the early exit points 1a-1c automatically when the reference outputs 3* are computed, with little or no extra computation overhead.

In step 140, a set of predetermined conditions 5 is provided. These predetermined conditions 5 are each dependent both on early-exit outputs 3a*-3c* and on reference outputs 3*.

According to block 141, at least one predetermined condition 5 may stipulate a prediction consistency 141 in the sense that the early-exit outputs 3a*-3c* are close to the reference outputs 3*.

According to block 142, at least one predetermined condition 5 may stipulate a confidence consistency in the sense that confidence estimates 4a*-4c* for early-exit outputs 3a*-3c* are close to confidence estimates 4* for reference outputs 3*.

According to block 143, at least one predetermined condition 5 may stipulate a performance continuity in the sense that the value of a given loss function for the early-exit outputs 3a*-3c* are close to the value of this loss function for the respective reference outputs 3*.

According to block 144, at least one predetermined condition 5 may stipulate that, given that the one or more confidences 4a-4c of the early-exit outputs 3a-3c exceed the one or more thresholds 6, an given undesirable state can be expected to be present in an expression strength of $\alpha$ or less with a probability that exceeds 1 - $\delta$, with $\alpha$ being a predetermined risk tolerance and $\delta$ being a predetermined error level. That is, the predetermined condition 5 may be a probabilistic condition.

In step 150, one or more thresholds 6 for the confidences 4a-4c of the early-exit outputs 3a-3c are evaluated. The thresholds are determined such that, if the confidences 4a-4c exceed the thresholds 6, the respective early-exit outputs 3a-3c can be expected to meet the conditions 5 even for unseen records 2 of measurement data not comprised in the set of calibration records 2*.

If at least one predetermined condition 5 is a probabilistic condition according to block 144, according to block 151, at least one threshold 6 may be chosen such that this probabilistic condition is met.

In particular, according to block 151a, for each candidate threshold 6# in a discrete set of candidate thresholds 6#, it may be set up as a null hypothesis that even with confidences 4a-4c above the threshold 6, the given undesirable state will be present with an expression strength of more than $\alpha$.

According to block 151b, this null hypothesis may then be tested based at least in part on the early-exit outputs 3a*-3c* and the reference outputs 3*. In particular, such a test may comprise determine whether, given that the null hypothesis is valid, it is probable that the early-exit outputs 3a*-3c* and the reference outputs 3* appear.

If the null hypothesis is rejected (truth value 0 at block 151b), according to block 151c, the candidate threshold 6# may be determined as one of the sought thresholds 6.

According to block 152, at least one first threshold 6a may be evaluated with respect to the prediction consistency.

According to block 153, at least one second threshold 6b may then be evaluated with respect to the confidence consistency.

According to block 154, a maximum of the first threshold 6a and the second threshold 6b may then be used as the final threshold 6.

In the example shown in Figure 1, in step 160, an input record 2 of measurement data that has been acquired by at least one sensor 7 is provided to the neural network 1.

In particular, according to block 161, a stream of input records 2 of measurement data may be provided to the neural network 1. According to block 162, the neural network 1 may be implemented on a hardware platform with less processing resources than are needed to process all input records 2 of measurement data from the stream by the full neural network 1.

In step 170, the confidence 4a-4c of at least one early-exit output 3a-3c of the neural network 1 is then determined. It is then checked in step 180 whether this confidence 4a-4c exceeds the threshold 6 that has previously been evaluated. If this is the case (truth value 1), in step 190, the early-exit output 3a-3c is used as the output of the neural network 1 in response to the input record 2 of measurement data.

In step 200, based at least in part on the early-exit output 3a-3c, the presence of at least one object instance 8 in a scenery that is being monitored by the at least one sensor 7 is detected. In step 210, this detected object instance 8 is included in a representation 9 of this scenery.

In step 220, based at least in part on the early-exit output 3a-3c, and/or on the representation of the scenery, an actuation signal 220a is computed. In step 230, a vehicle 50, a driving assistance system 51, a robot 60, a quality inspection system 70, a surveillance system 80, and/or a medical imaging system 90, is actuated with the actuation signal 220a.

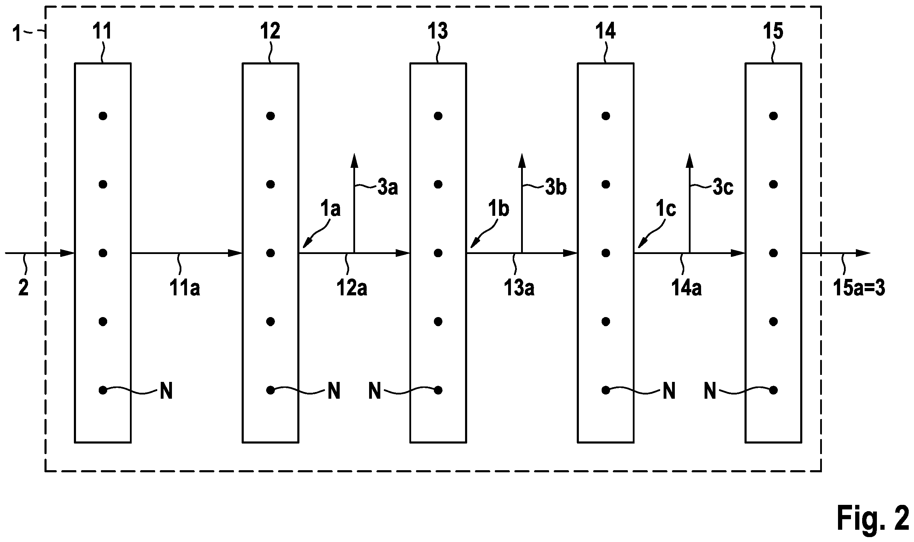

Figure 2 visualizes how, in an exemplary embodiment, a record 2 of measurement data may be processed in a neural network 1. In the example shown in Figure 2, the neural network 1 has five layers 11-15, each layer 11-15 comprising a plurality of neurons N. The output 11a-14a of each layer is used as input for the respective next layer 12-15. The first layer 11 is the input layer that accepts the record 2 of measurement data. The layers 12 to 14 are hidden layers. The layer 15 is the output layer whose output 15a is also the final output 3 of the neural network 1 as a whole.

In the example shown in Figure 2, the output ports of the hidden layers 12 to 14 are early-exit points 1a-1c. At these early-exit points 1a-1c, the respective outputs 12a-14a may be tapped as early-exit outputs 3a-3c. If it then turns out that such an early-exit output 3a-3c has a sufficient confidence as per the thresholds adjusted according to the method 100 presented above, this early-exit output 3a-3c may be used in place of the output 3 that would have been obtained by processing the full neural network 1. For example, if the early-exit output 3a is already sufficient, the processing of layers 13, 14 and 15 may be omitted.

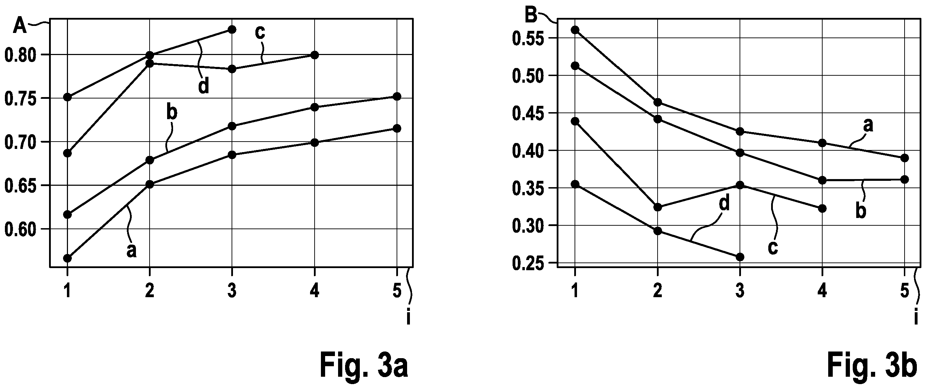

Figure 3 illustrates how the performance of early-exit outputs 3a-3c from a neural network 1 depends on the index i of the early-exit point 1a-1c from which the respective early-exit outputs 3a-3c were taken. In Figure 3a, the performance is measured in terms of the accuracy A, where higher values are better. In Figure 3b, the performance is measured in terms of the Brier score B that is specifically configured to measure the accuracy of probabilistic predictions. The Brier score B corresponds to a mean square error, so lower values are better. The respective measure for the performance is plotted over the index i. The curves a to d correspond to different neural network architectures as follows:

- curve a relates to the MSDNet architecture;
- curve b relates to the L2W-DEN architecture;
- curve c relates to the Dyn-Perc architecture; and
- curve d relates to the DViT architecture.

It is clearly evident from Figure 3 that, in the final layers before the processing of the input record 2 of measurement data has finished, the accuracy A and the Brier score B slow down their rate of change before converging to their final values. This means that, if one is willing to trade in a little bit of performance, one can save very much time and energy for processing. The effect is particularly pronounced for the MSDNet (curve a) and L2W-DEN (curve b) networks, where the processing with three more layers 3 to 5 results in a score improvement of less than 0.1. This means that an answer which is sufficient for the concrete application at hand may, in many instances, be obtained in a shorter time and with less energy consumption. The method 100 presented above may provide a (probabilistic) guarantee that the early-exit values 3a-3c are really good enough for the application at hand.

**Claims**

**1.** A method (100) for determining for which inputs records (2) of measurement data the processing by a neural network

(1) may be cut short by obtaining the output (3, 3a-3c) from an early-exit point (1a-1c) of the neural network (1), rather than by traversing the whole neural network (1), the method comprising the steps of:

- providing (110) a set of calibration records (2*) of measurement data;
- processing (120) the calibration records (2*) of measurement data by the full neural network (1) to obtain reference outputs (3*);
- recording (130) one or more early-exit outputs (3a*-3c*) that the neural network (1) outputs for the calibration records (2*) at one or more early-exit points (1a-1c), as well as respective confidences (4a*-4c*) of these early-exit outputs (3a*-3c*);
- providing (140) a set of predetermined conditions (5) that are each dependent both on early-exit outputs (3a*-3c*) and on reference outputs (3*); and
- evaluating (150) one or more thresholds (6) for the confidences (4a-4c) of the early-exit outputs (3a-3c) such that, if the confidences (4a-4c) exceed the thresholds (6), the respective early-exit outputs (3a-3c) can be expected to meet the conditions (5).

2. The method (100) of claim 1, wherein at least one condition (5) stipulates (144) that, given that the one or more confidences (4a-4c) of the early-exit outputs (3a-3c) exceed the one or more thresholds (6), an given undesirable state can be expected to be present in an expression strength of $\alpha$ or less with a probability that exceeds $1 - \delta$, with $\alpha$ being a predetermined risk tolerance and $\delta$ being a predetermined error level.

3. The method (100) of claim 2, wherein the evaluating of the thresholds (6) comprises:

- setting up (151a), for each candidate threshold (6#) in a discrete set of candidate thresholds (6#), the null hypothesis that even with confidences (4a-4c) above the threshold (6), the given undesirable state will be present with an expression strength of more than $\alpha$;
- testing (151b) this null hypothesis based at least in part on the early-exit outputs (3a*-3c*) and the reference outputs (3*); and
- in response to the null hypothesis being rejected, determining (151c) the candidate threshold (6#) as one of the sought thresholds (6).

4. The method (100) of any one of claims 1 to 3, wherein the neural network (1) is a predictive model whose output comprises at least one sought property of an input record (2) of measurement data.

5. The method (100) of any one of claims 2 or 3, and also claim 4, wherein the undesirable state comprises that the true value of a quantity predicted for a calibration record (2*) is not in a set of values (3*) predicted by the neural network (1) for this calibration record (2*).

6. The method (100) of any one of claims 1 to 5, wherein at least one of the predetermined conditions (5) stipulates:

- a prediction consistency (141) in the sense that the early-exit outputs (3a*-3c*) are close to the reference outputs (3*); and/or
- a confidence consistency (142) in the sense that confidence estimates (4a*-4c*) for early-exit outputs (3a*-3c*) are close to confidence estimates (4*) for reference outputs (3*); and/or
- a performance continuity (143) in the sense that the value of a given loss function for the early-exit outputs (3a*-3c*) are close to the value of this loss function for the respective reference outputs (3*).

7. The method (100) of claim 6, wherein:

- at least one first threshold (6a) is evaluated (152) with respect to the prediction consistency;
- at least one second threshold (6b) is evaluated (153) with respect to the confidence consistency; and
- a maximum of the first threshold (6a) and the second threshold (6b) is used (154) as the final threshold (6).

8. The method (100) of any one of claims 1 to 7, wherein the neural network (1) is configured to output a classification, and/or a semantic segmentation, of the input record (2) of measurement data.

9. The method (100) of any one of claims 1 to 8, further comprising:

- providing (160), to the neural network (1), an input record (2) of measurement data that has been acquired by at least one sensor (7);

• determining (170) the confidence (4a-4c) of at least one early-exit output (3a-3c) of the neural network (1); and

• in response to this confidence (4a-4c) exceeding (180) the evaluated threshold (6), using (190) the early-exit output (3a-3c) as the output of the neural network (1) in response to the input record (2) of measurement data.

10. The method (100) of claim 9, further comprising:

• detecting (200), based at least in part on the early-exit output (3a-3c), the presence of at least one object instance (8) in a scenery that is being monitored by the at least one sensor (7); and

• including (210) this detected object instance (8) in a representation (9) of this scenery.

11. The method (100) of any one of claims 9 to 10, further comprising:

• determining (220), based at least in part on the early-exit output (3a-3c), and/or on the representation of the scenery, an actuation signal (220a); and

• actuating (230) a vehicle (50), a driving assistance system (51), a robot (60), a quality inspection system (70), a surveillance system (80), and/or a medical imaging system (90), with the actuation signal (220a).

12. The method (100) of any one of claims 9 to 11, wherein:

• a stream of input records (2) of measurement data is provided (161) to the neural network (1); and

• the neural network (1) is implemented (162) on a hardware platform with less processing resources than are needed to process all input records (2) of measurement data from the stream by the full neural network (1).

13. A computer program, comprising machine-readable instructions that, when executed by one or more computers and/or compute instances, cause the one or more computers and/or compute instances to perform the method (100) of any one of claims 1 to 12.

14. A non-transitory machine-readable storage medium, and/or a download product, with the computer program of claim 13.

15. One or more computers and/or compute instances with the computer program of claim 13, and/or with the non-transitory machine-readable storage medium and/or download product of claim 14.

Fig. 1b

Fig. 1a

**Fig. 1a**

**Fig. 1b**

50,51,60,70,80,90

Fig. 2

**Fig. 3a**

**Fig. 3b**

EP 4 645 161 A1

Europäisches
Patentamt

European
Patent Office

Office européen
des brevets

# EUROPEAN SEARCH REPORT

**Application Number**

EP 24 17 3754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/056357 A1 (ZHANG MI [US] ET AL) 25 February 2021 (2021-02-25) * paragraphs [0003] - [0153] * | 1-15 | INV. G06N3/02 G06N3/082 G06V10/70 |
| A | US 2023/127001 A1 (DAS MAYUKH [IN] ET AL) 27 April 2023 (2023-04-27) * paragraphs [0002] - [0099] * | 1-15 | |
| A | US 2023/128637 A1 (KOURIS ALEXANDROS [GB] ET AL) 27 April 2023 (2023-04-27) * paragraphs [0002] - [0173] * | 1-15 | |
| A | US 2021/012194 A1 (LASKARIDIS STEFANOS [GB] ET AL) 14 January 2021 (2021-01-14) * paragraphs [0001] - [0116] * | 1-15 | |
| A | US 2022/398451 A1 (SURYA SIVA KALYANA PAVAN KUMAR MALLAPRAGADA NAGA [US] ET AL) 15 December 2022 (2022-12-15) * paragraphs [0001] - [0075] * | 1-15 | |

**TECHNICAL FIELDS SEARCHED (IPC)**

G06N
G06V

The present search report has been drawn up for all claims

| Place of search | Date of completion of the search | Examiner |
|---|---|---|
| The Hague | 7 October 2024 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 3754

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2024

| Patent document cited in search report | Publication date | Patent family member(s) | Publication date |
|---|---|---|---|
| US 2021056357 A1 | 25-02-2021 | NONE | |
| US 2023127001 A1 | 27-04-2023 | EP 4264502 A1 | 25-10-2023 |
| | | US 2023127001 A1 | 27-04-2023 |
| | | WO 2023282569 A1 | 12-01-2023 |
| US 2023128637 A1 | 27-04-2023 | CN 116438570 A | 14-07-2023 |
| | | EP 3996054 A2 | 11-05-2022 |
| | | EP 4300440 A2 | 03-01-2024 |
| | | US 2023128637 A1 | 27-04-2023 |
| | | WO 2022098203 A1 | 12-05-2022 |
| US 2021012194 A1 | 14-01-2021 | CN 114556366 A | 27-05-2022 |
| | | EP 3948684 A1 | 09-02-2022 |
| | | US 2021012194 A1 | 14-01-2021 |
| | | WO 2021006650 A1 | 14-01-2021 |
| US 2022398451 A1 | 15-12-2022 | EP 4356304 A1 | 24-04-2024 |
| | | US 2022398451 A1 | 15-12-2022 |
| | | WO 2022265773 A1 | 22-12-2022 |

EPO FORM P0459

For more details about this annex : see Official Journal of the European Patent Office, No. 12/82